# EUROPÄISCHE PATENTANMELDUNG

(11) **EP 4 509 555 A2**
(43) Veröffentlichungstag der Anmeldung: **19.02.2025**
(21) Anmeldenummer: 24221051.6
(22) Anmeldetag: 01.11.2018
(51) Int. Cl.: C08K 3/26

(54) **VERFAHREN ZUM HERSTELLEN EINER EXTRUDIERTEN PLATTE**

(30) Priorität: 03.11.2017 DE 102017125743
(62) Teilanmeldung aus: 21158516.1
(71) Anmelder: Unilin, BV, 8710 Wielsbeke (BE)
(72) Erfinder: GRAFENAUER, Thomas, 4170 Lichtenau im Mühlkreis (AT)
(74) Vertreter: Unilin Technologies

(57) **Zusammenfassung**

Verfahren zum Herstellen einer extrudierten Platte mit folgenden Schritten:
- Bereitstellen von Calciumcarbonat (CaC03)-Pulver und Polyvinylchlorid (PVC)-Pulver;
- Bereitstellen von Additiven, wobei der Anteil an Calciumcarbonat (CaCO3)-größer ist als der Anteil an PVC;
- Vermischen des Calciumcarbonat (CaC03)-Pulvers mit dem Polyvinylchlorid (PVC)-Pulver und den Additiven, und Erhitzen der Mischung zu einer knetbaren Masse;
- Förderung der Masse zu einem Extruder mittels Schnecken;
- Aufschmelzen und Extrudieren der Masse mittels eines Extruders und Formen mittels einer Schlitzdüse zu einer Platte;
- Drücken der noch warmen Platte auf eine gewünschte Endstärke.

## Beschreibung

Die Erfindung betrifft ein Verfahren zum Herstellen einer extrudierten Platte mit folgenden Schritten:
a) Bereitstellen von Calciumcarbonat (CaCO3)-Pulver,
b) Bereitstellen von Polyvinylchlorid (PVC)-Pulver,
c) Bereitstellen von Additiven als Stabilisatoren, bestehend aus mindestens Ca/Zn - Stabilisatoren, Schlagzähkomponenten und internen sowie äußeren Wachsen, wobei
   ci) der Anteil an Calciumcarbonat (CaCOs)-Pulver zwischen 60 und 80 Gew.%, der Anteil an Polyvinylchlorid (PVC)-Pulver zwischen 20 und 40 Gew.% und der Anteil an Additiven bis zu 5 Gew.% beträgt,
d) Vermischen des Calciumcarbonat (CaCOs)-Pulvers mit dem Polyvinylchlorid (PVC)-Pulver und den Additiven,
e) Erhitzen der Mischung auf eine Temperatur von 100 bis 140°C bis das Polyvinylchlorid (PVC) zu einer knetbaren Masse erweicht und sich das Calciumcarbonat (CaCO3) zumindest teilweise mit dem Polyvinyl (PVC) verbindet,
f) Abkühlen der Masse auf eine Temperatur von 40 bis 50°C,
g) Förderung der Masse zu einem Extruder,
h) Aufschmelzen und Extrudieren der Masse mittels eines Extruders und Formen mittels einer Schlitzdüse zu einer Platte,
i) Drücken der noch warmen Platte mittels mindestens zweier Kalanderwalzen auf eine gewünschte Endstärke.

Außerdem betrifft die Erfindung eine nach dem Verfahren hergestellte Platte. Diese Platte wird vorzugsweise als Fußbodenbelag verwendet.

Eine ähnliche Platte ist beispielsweise aus der WO 2014/161956 A1 bekannt.

Fußbodenbeläge aus Polyvinylchlorid (PVC), die im Markt vielfach nur kurz als Vinylböden oder als LVT (Luxury Vinyl Tiles) angeboten werden, sind derzeit in Mode. Vinyl ist ein beliebter Bodenbelag für Wohnräume, weil dieser gute Hygieneeigenschaften aufweist, äußerst funktional ist und auch mit einer guten Haptik versehen werden kann. Diese Bodenbeläge werden in Stärken von ca. 5 mm gefertigt und sind auf dem Untergrund verklebbar. Es sind auch PVC-Paneele bekannt, die mittels Klickprofilen zur leimlosen, schwimmenden Verlegung geeignet sind, wie dies bei Laminatfußbodenpaneelen üblich ist. Gegenüber Laminatfußböden besteht der Vorteil, dass PVC-Fußböden feuchtebeständig sind, eine angenehmere Haptik aufweisen und wesentlich bessere Trittschall- und Gehschalleigenschaften besitzen. Sie können mit tiefen Oberflächenstrukturen versehen werden können.

Nachteilig ist, dass Vinyl-Fußbodenbeläge bzw. LVT nur bedingt dimensionsstabil sind und sich bei Wärme ausdehnen, beim Abkühlen aber nur bedingt wieder in ihre ursprüngliche Form zurückkehren. Innerhalb eines Raumes kann es sogar zu Verwerfungen kommen, wenn die Erwärmung des Fußbodens nur partiell, zum Beispiel im Bereich einer zur Sonne gerichteten Fensterfront erfolgt. Dadurch dass diese Produkte im Vergleich zu Laminat weich sind, können Unebenheiten auf dem Unterboden an der Oberseite des Fußbodens spürbar werden. Diese Unebenheiten werden gewissermaßen "durchtelegrafiert", was nachteilig ist. Die Verwendung von Weichmachern wird von nicht unerheblichen Teilen der Bevölkerung als gesundheitsschäd-lieh angesehen, obwohl strenge gesetzliche Bestimmungen die Verwendung von Weichmachern reglementieren.

Aus der DE 82 17 074 U1 ist ein PVC-Belag zur zeitweiligen Abdeckung von Fußböden in Form eines rechteckigen Zuschnitts mit einer Trittschicht und einer damit verbundenen rutschfesten Rückenschicht in Gestalt einer weichen, mit einem reliefartigen Oberflächenprofil versehenen Kunststoffschicht bekannt. Die Rückenschicht ist mit einem hohen Füllstoffanteil versehen und so weich, dass sie unter der Trittbeanspruchung gerade noch nicht auf dem Fußboden festklebt.

Aus der DE 20 2012 004 994 U1 ist ein Fußbodenbelag mit einem Kern aus Polyvinylchlorid (PVC) bekannt, der zusätzlich Füllstoffe enthält. Auf die Oberseite des Kerns ist eine Nutzschicht aus PVC aufkaschiert. An den gegenüberliegenden Seitenkanten ist das Paneel mit Verbindungs- und Verriegelungsmitteln versehen, übe die mehrere Paneele miteinander verbunden und zueinander verriegelt werden können. Die Herstellung eines solchen Paneels ist recht aufwendig.

Als Füllstoff wird in der PVC-lndustrie üblicher weise Calciumcarbonat (CaCO3) als Basis genommen. Aus der US 2017/0446845 A1 ist eine aus PVC-Pulver und leichtem Kalzium-Mischpulver mit weiteren Zusätzen hergestellte Kunststoffplatte bekannt, die zwischen drei Kalanderwalzen mit einer Verschleißschutzschicht und einer Papierschicht verbunden wird. Die Platte kann mit einer Oberflächenschicht in eine Mehrfach-Walzenkalander aufgebracht werden und die Deckschicht kann aus Kunststoff bestehen.

Hiervon ausgehend liegt der Erfindung die Aufgabe zugrunde, einen Fußbodenbelag zu schaffen, der die positiven Eigenschaften eines PVC-Fußbodens aufweist, aber dessen genannte Nachteile, insbesondere das "Durchtelegrafieren" von Unebenheiten aus dem Unterboden vermeidet. Und dabei eine besonders hochwertige Sichtseite aufweist, die einen guten optischen Eindruck auf den Betrachter macht.

Zur Problemlösung zeichnet sich das Verfahren dadurch aus, dass auf die Oberseite mindestens eine Schicht eines pigmentierten Lacks aufgetragen wird, und auf den pigmentierten Lack zur Erhöhung der Kratzfestigkeit ein weiterer Lack aufgetragen wird.

Vorzugsweise wird der weitere Lack in mindestens zwei Schichten aufgetragen. Um eine gute Abriebfestigkeit zu gewährleisten, wird die erste Schicht in einer Menge von ca. 80 bis 100 g aufgetragen, und um die Kratzfestigkeit zu erreichen wird die zweite Schicht in einer Menge von ca. 10 bis 30 g aufgetragen.

Das erfindungsgemäße Verfahren kehrt zunächst den bisher häufigen Ansatz zur Herstellung von PVC-Platten um. Es wird ein mineralischer Boden geschaffen und das Calciumcarbonat als Basis für die Platte genommen und mit PVC gebunden. Die nach diesem Verfahren hergestellte Platte ist weitestgehend dimensionsstabil, wasserbeständig und weist ein hohes spezifisches Gewicht auf. Damit sorgt sie für einen angenehmen Gehschall und ist hart genug, um Unebenheiten aus dem Unterboden auszugleichen, bzw. ein "Durchtelegrafieren" zu verhindern, und sie ist außerdem stabil genug um eine Kantenprofilierung vorzunehmen und dabei sogenannte "Klickprofile" anzubringen, mit Hilfe derer mehrere Platten leimlos miteinander verbunden werden können. Eine "Klick"-Profilierung ist aus der Laminatbodenindustrie hinreichend bekannt (beispielsweise aus der DE 198 51 200 C2 oder der WO 97/047834 A1). Durch die größere Elastizität des Werkstoffs und die homogenere Oberfläche gegenüber Paneelen aus Holzwerkstoff kann eine größere Bandbreite an Klickprofilen verwendet werden.

Es hat sich herausgestellt, dass dadurch ein besonders gutes Ergebnis erzielt wird, weil der Anteil an CaCO3 größer ist als der Anteil an PVC. Der Anteil an Calciumcarbonat (CaCOs)-Pulver beträgt vorzugsweise zwischen 65 und 80 Gew.%, insbesondere vorzugsweise zwischen 70 und 80 Gew.% und ganz bevorzugt 75 Gew.%. Der Anteil an Polyvinylchlorid (PVC)-Pulver wird dann hieran entsprechend angepasst und beträgt vorzugsweise zwischen 20 und 35 Gew.%, insbesondere zwischen 20 und 30 Gew.% und ganz bevorzugt 25 Gew.%. Wobei der notwendige Anteil an Additiven natürlich berücksichtigt werden muss.

Vorzugsweise werden zunächst nur 30% bis 40% der bereitgestellten Gewichtsanteile Calciumcarbonat (CaCOs)-Pulver mit dem Polyvinylchlorid (PVC)-Pulver und den Additiven (heiß) vermischt und das Einmischen der restlichen Gewichtsanteile Calciumcarbonat(CaCO3)-Pulver erfolgt in die abkühlende oder der abgekühlten Masse.

Zu Beginn oder mit dem Einmischen des restlichen bereitgestellten Calciumcarbonat (CaCOs)-Pulvers können auch Farbpigmente, beispielsweise Ruß eingemischt werden, sodass eine farbige Platte hergestellt wird.

Vorzugsweise sind das Polyvinylchlorid-Pulver und das Additive-Pulver frei von Weichmachern, sodass eine völlig weichmacherfreie Platte hergestellt werden kann.

Das Kalziumzink (Ca/Zn) als Stabilisator wird vorzugsweise in einer Menge von weniger als 5 Gewichtsanteilen verwendet.

Die Korngröße des Polyvinylchlorid-Pulvers liegt im Bereich von 80 bis 200 µm.

Das Calciumcarbonat-Pulver wird vorzugsweise in einer Korngröße von 1 bis 10 µm verwendet.

Die Schlitzdüse des Extruders hat vorzugsweise eine Breite von 1.250 mm und/oder eine Dicke von 2 bis 10 mm, insbesondere vorzugsweise 4 mm, sodass eine großformatige Platte hergestellt werden kann, aus der eine Mehrzahl einzelner Paneele her-ausgetrennt wird. Die Plattenbreite kann der Länge eines Paneels entsprechen.

Vorzugsweise wird die extrudierte Platte über drei oder vier, insbesondere bis zu fünf Kalanderwalzen geführt, und mittels der Kalanderwalzen kann auch eine Struktur in die Oberseite der extrudierten Platte eingeprägt werden. Die Strukturierung kann auch mittels eines Pressblechs oder einer Strukturfolie erfolgen.

Vorzugsweise kann in einem ersten Schritt die Struktur in die Oberfläche der Oberseite eingeprägt und einem daran anschließenden zweiten Schritt das Dekor im Digitaldruck unter Berücksichtigung der Struktur aufgedruckt werden.

Wenn die Oberseite der Platte strukturiert ist, kann die Oberseite nach dem Auftragen der ersten weiteren Lackschicht abgebürstet werden, um sicherzustellen, dass die Struktur nicht durch die aufgetragene Lackschicht überdeckt wird. Hierzu ist mindestens eine rotierende Bürste vorgesehen, die über die volle Breite der Platte reicht. Die Rotationsachse der Bürste kann dabei im rechten Winkel zur Transportrichtung der Platte angeordnet sein. Auch eine Schrägstellung der Rotationsachse zur Transportrichtung der Platte ist möglich. Ebenso können mehrere Bürsten hintereinander vorgesehen sein.

Selbstverständlich wird beim Abbürsten der Lack nicht vollständig von der Oberseite entfernt, sondern nur die Struktur wieder hergestellt.

Vorzugsweise weisen die mindestens beiden weiteren Lacke unterschiedliche Glanzgrade auf, um die optische Wahrnehmbarkeit der Struktur zu verbessern. Die erste Lackschicht, die in die Struktur eingebürstet werden kann, bestimmt den Glanzgrad am Strukturgrund und sie kann vorzugsweise auch weicher sein als die zweite bzw. letzte aufgebrachte Lackschicht, die die Kratzfestigkeit erhöht und auf den hervorstehenden Teilen der Struktur vorhanden sein muss und dort den Glanzgrad bestimmt. In den Vertiefungen kommt es auf die Kratzfestigkeit weniger an als auf den Erhöhungen.

Die zweite weitere Lackschicht wird vorzugsweise über eine Moosgummiwalze aufgetragen, nachdem die erste Lackschicht von der rotierenden Bürste in die Vertiefungen eingebürstet wurde. Die erste weitere Lackschicht kann angehärtet werden, bevor die zweite weitere Lackschicht aufgetragen wird.

Vorzugsweise weisen die mindestens beiden weiteren Lacke unterschiedliche Festigkeiten auf, insbesondere kann der erste Lack weicher sein als der zweite Lack. Um zu vermeiden, dass die aufzubringenden Lacke in die Vertiefungen der strukturierten Oberfläche der Platte dringen und den Struktureffekt zerstören oder zumindest stark verwässern kann, kann auch vorgesehen sein, bei sehr hohen Durchlaufgeschwindigkeiten von beispielsweise 120m/s einen Gießlack aufzutragen und diesen unmittelbar danach mit Elektronenstrahlen oder mit sehr kräftigen UV-Strahlern oder mit einer Kombination von beiden soweit auszuhärten, dass ein Fließen in die Vertiefungen der Struktur nicht mehr stattfinden kann.

Wenn zusammen mit der Platte ein Polyvinyl-Dekor-Film und/oder ein Polyvinylchlorid-Schutzfilm über die Kalanderwalzen zugeführt und mit der Platte verpresst wird, wird die Herstellung weiter vereinfacht und ein gebrauchsfertiges Produkt erzeugt, das nur noch in einzelne Paneele aufgeteilt werden muss.

Auf die Oberseite der extrudierten Platte kann auch eine Dekorfolie aufkaschiert (aufgeklebt) werden. Das kann über der strukturierten Oberseite erfolgen. Auch eine nachträgliche Strukturierung in die aufkaschierte Dekorfolie ist möglich.

Die Oberseite kann mit einem Dekor bedruckt werden. Der Druck kann digital erfolgen. Hierzu wird vorzugsweise die Oberseite vor dem Bedrucken mit einem Primer grundiert. Der Primer kann eingefärbt sein. Anstatt oder zusätzlich zu dem Primer kann auch eine pigmentierte Grundierung aufgedruckt werden. Mit der pigmentierten Grundierung wird eine Grundlage für einen Dekordruck geschaffen, um dabei später Farbe einsparen zu können.

Das Dekor ist vorzugsweise ein Holzdekor.

Die Oberseite der Platte ist mit pigmentierten Lacken lackiert werden, um beispielsweise eine unifarbene Platte zu erhalten. Diese Lackierung ist vorzugsweise hochglänzend.

Der Dekordruck erfolgt vorzugsweise passend zu der in die Oberseite der Platte eingeprägten Struktur. Insbesondere kann der Dekordruck synchron erfolgen. Das heißt beispielsweise bei einem Holzdekor werden durch den Druck und die Struktur die Holzmaserung und Poren wiedergegeben, sodass nicht nur optisch, sondern auch haptisch der Eindruck eines natürlichen Holzes entsteht.

Auch die einfarbige Lackierung kann auf eine strukturierte Oberseite aufgetragen werden.

Die extrudierte Platte kann auch mit einem Holzfurniert beklebt werden. Das Holzfurnier kann mit hochabriebfesten Lacken lackiert oder einem entsprechenden Coating versehen werden und mit einem Decklack in Verbindung mit einem Primer montiert werden. Hierdurch wird der Holzcharakter vollständig natürlich wiedergegeben. Bei dieser Variante wird ein extrem dünner, dimensionsstabiler Holzfußboden mit feuchtebeständiger und hochbelastbarer Trägerplatte realisierbar, der sogar in Feuchträumen eingesetzt werden könnte.

Zur Erhöhung der Kratzfestigkeit wird die mit dem dem Lack beschichte Platte lackiert werden. Die Lackierung zur Erhöhung der Kratzfestigkeit kann mit UV- oder elektronenstrahlhärtenden Lacken erfolgen oder es kann eine Beschichtung mit einem Polyurethan- oder Polyolefin-Hotcoating erfolgen.

Auf der Unterseite, also der der Beschichtung gegenüberliegenden Seite, kann die Platte zur Trittschalldämpfung insbesondere mit XPS (extrudiertes Polystyrol) oder Kork beschichtet werden. Dadurch werden die Trittschalleigenschaften nach unten verbessert, weil diese durch das hohe spezifische Gewicht der Platte, das vorzugsweise bei 1.900 bis 2.100 kg/m³, insbesondere bei 2.000 kg/m³ liegt, beeinträchtigt sind. Zur Dämpfung der Trittschalleigenschaften sind grundsätzlich alle am Markt er-hältlichen Produkte geeignet. Die Beschichtung, insbesondere das extrudierte Polystyrol oder die Korkschicht wird vorzugsweise in einer Stärke von 1,0 bis 1,5 mm aufgebracht.

Die Platte kann nicht nur als Fußbodenbelag, sondern auch als Wand- oder Deckenbelag eingesetzt werden. Dadurch, dass sie dimensionsstabil ist, kann sie bei der Verwendung als Bodenbelag zur schwimmenden Verlegung oder zum Verkleben mit dem Unterboden vorgesehen sein. Da die Platte feuchtigkeitsresistent ist, kann sie auch in Feuchträumen eingesetzt werden. Durch die Verklebung wird das Eindringen von Wasser verhindert.

Aus der großformatigen Platte können Paneele (Planken) bzw. kleinformatigere Platten ausgeschnitten werden. Diese Platten können z.B. wie Fliesen zur Beplankung einer Wand oder eines Unterbodens verwendet werden. Aus Kosten- und Gewichtsgründen wird bei der Verwendung als Wandbelag eine Platte mit einer Stärke von vorzugsweise 2 bis 3 mm hergestellt. Die Fliese kann glatt oder mit einer Struktur versehen sein.

Die Herstellung erfolgt in der Art, dass in einem Mischer CaCO3-Pulver (Kreide) PVC-Pulver und das Pulver mit den Additiven vermischt und auf eine Temperatur von ca. 120°C erhitzt werden. Von dem bereitgestellten Calciumcarbonat-Pulver können zunächst nur etwa 30 % mit dem Polyvinylchlorid-Pulver vermischt werden, wodurch sich das Calciumcarbonat an der Oberfläche oder im PVC bindet. Wenn das Pulver ausreichend miteinander vermengt und diese Mischung knetweich ist, wird die Masse auf eine Temperatur von 40 bis 50°C abgekühlt und dann die restlichen 70% des bereitgestellten Calciumcarbonat-Pulvers in die abkühlende oder abgekühlte Masse eingemischt. Bei dieser Vorgehensweise wird Energie eingespart, weil nicht sofort das gesamte Calciumcarbonat-Pulver erhitzt werden muss. Da so-wieso nur ca. 20 bis 30 % des CaCO3-Pulvers an der Oberfläche oder im PVC gebunden werden können, ist das Einmischen des restlichen CaCO3-Pulvers in die abgekühlte Masse problemlos. Grundsätzlich können aber alle Gewichtsanteile sofort zusammengemischt werden. Das freie Calciumcarbonat-Pulver verteilt sich dabei sehr gut in der Mischung.

Bei einem bevorzugten Ausführungsbeispiel wurden 300 Gewichtsanteile Calciumcarbonat-Pulver, 100 Gewichtsanteile Polyvinylchlorid-Pulver und 15 Gewichtsanteile Additive als Stabilisatoren verwendet.

Um eine Separierung zu verhindern wird diese Masse dann bevorzugt mittels Schnecken zu einem Extruder gefördert. Damit eine gute Verbindung der einzelnen Bestandteile erreicht wird, ist der Extruder mit Schnecken ausgestattet, die eine lange Stauzone ausbilden. Am Extruderaustritt befindet sich eine Schlitzdüse, deren Breite und Dicke nach den gewünschten Abmessungen der Platte gewählt wird. Die Breite von 1 .250 mm und die Dicke von 4 mm haben sich als gut handhabbar herausgestellt. Aus der Schlitzdüse tritt mit einer Temperatur von ca. 165°C ein plattenförmi-ger Werkstoff aus, der über drei vertikal angeordnete Kalibrierwalzen auf die Endstärke gedrückt wird. Durch die vertikale Anordnung der Walzen wird der Werkstoff beim Kalibrieren zweimal jeweils im Halbkreis zuerst über die zweite und dann über die dritte Walze geführt. Das besondere bei dem Verfahren ist, dass gleichzeitig mit der Platte ein bedruckter PVC-Dekorfilm und ein PVC-Schutzfilm durch die Kalander geführt werden. Der zweite Kalander ist zudem mit einer Strukturoberfläche (in der Regel ein Holzstruktur) versehen, sodass am Ende eine fertige Platte mit einer dekorativen, strukturierten Oberfläche und einer Schutzschicht vorliegt, die im Anschluss nur noch lackiert werden muss, um die Kratzfestigkeit zu erhöhen. Danach erfolgen die Konfektionierung und die Profilierung der Seitenkanten.

Die eingesetzten PVC-Dekorfilme und/oder Schutzfilme können Weichmacher enthalten. Diese Variante der Platte ist dann nicht vollkommen frei von Weichmachern, enthält aber wesentlich weniger Weichmacher als herkömmliches LVT.

Das Verfahren kann auch in einer Variante ausgeführt werden, wobei der Werkstoff bzw. die Platte ohne das Aufbringen eines Dekorfilms kalibriert wird. Dann wird kein Strukturkalander, sondern ein glatter Kalander eingesetzt. Die Platte wird anschließend entweder digital bedruckt oder mit pigmentierten Lacken, anschließend in Paneele aufgeteilt und gegebenenfalls mit entsprechenden Schutzlacken und einem Decklack versehen und dann zu einem Fußboden verarbeitet. Bei diesem Verfahren können UV-Lacke oder vorzugsweise elektronenstrahlhärtende Lacke eingesetzt werden. Letztere haben sich als besonders gut für Fußboden geeignet herausgestellt. Bei dieser Variante sind absolut keine Weichmacher im Endprodukt enthalten.

In einer weiteren Variante kann der Werkstoff bzw. die Platte beim Kalibrieren mit einer Struktur versehen werden, jedoch ohne Dekorfilm und ohne Schutzfilm. Die Oberseite der Platte wird zunächst mit einem Druckprimer grundiert anschließend digital bedruckt und zwar in der Form, dass das Druckbild mit der Struktur übereinstimmt (embossed in register). Hier können Holzdekore, aber auch Steindekore und alle anderen Motive (Fantasiedekore) abgebildet werden. Anschließend erfolgt eine Lackierung mit Schutzlack über Gießlacke, die sich der Oberfläche der Platte anpassen.

Die Decklacke werden über Moosgummiwalzen aufgetragen. Auch hier können UV-Lacke oder elektronenstrahlenhärtende Lacke eingesetzt werden. Auch diese Variante ist frei von Weichmachern. Das Besondere an dieser Variante ist, dass der (digitale) Dekordruck erfolgt, nachdem die Oberseite der Platte mit einer Struktur versehen wurde. Das Druckbild wird folglich an die Struktur angepasst. Herkömmlich wird die Struktur zum Schluss in die Oberseite einer Platte eingeprägt, also die Struktur an das Dekor angepasst.

Die Platte kann in jeder gewünschten Farbe hergestellt werden.

Die aus dem Extruder kommende Platte kann auch unstrukturiert zur Verfügung gestellt werden. In diesem Fall kann sie mit einem pigmentierten Lack lackiert werden, um beispielsweise eine unifarbene Platte zu schaffen. Die Lackierung mit dem pigmentierten Lack kann auch auf einer strukturierten Oberseite erfolgen. Zur Erhöhung der Kratz- und Abriebfestigkeit wird die lackierte oder beschichtete Platte mit UV- oder elektronenstrahlenhärtenden Lacken überzogen oder mit einem Polyurethan oder Polyolefin-Hotcoating überzogen.

Die Trittschalldämpfung kann, wenn die Platte für den Fußbodenbereich eingesetzt werden soll, auf alle vorgenannten Varianten aufgebracht werden. Der Gehschall, also das Schallempfinden im Raum ist aufgrund des hohen spezifischen Gewichts der Platte sehr gut.

Im Übrigen betrifft der Erfindung noch verschiedene bevorzugten Ausführungsbeispiele gemäss unterstehenden nummerierten Absätze:
1.- Verfahren zum Herstellen einer extrudierten Platte mit folgenden Schritten:
   a) Bereitstellen von Calciumcarbonat (CaCO3)-Pulver,
   b) Bereitstellen von Polyvinylchlorid (PVC)-Pulver,
   c) Bereitstellen von Additiven als Stabilisatoren, bestehend aus mindestens Ca/Zn - Stabilisatoren, Schlagzähkomponenten und internen sowie äußeren Wachsen, wobei
      c1) der Anteil an Calciumcarbonat (CaCO3)-Pulver zwischen 60 und 80 Gew.%, der Anteil an Polyvinylchlorid (PVC)-Pulver zwischen 20 und 40 Gew.% und der Anteil an Additiven bis zu 5 Gew.% beträgt;
   d) Vermischen des Calciumcarbonat (CaCO3)-Pulvers mit dem Polyvinylchlorid (PVC)-Pulver und den Additiven,
   e) Erhitzen der Mischung auf eine Temperatur von 100 bis 140°C bis das Polyvinylchlorid (PVC) zu einer knetbaren Masse erweicht und sich das Calciumcarbonat (CaCO3) zumindest teilweise mit dem Polyvinyl (PVC) verbindet,
   f) Abkühlen der Masse auf eine Temperatur von 40 bis 50°C,
   g) Förderung der Masse zu einem Extruder,
   h) Aufschmelzen und Extrudieren der Masse mittels eines Extruders und Formen mittels einer Schlitzdüse zu einer Platte,
   i) Drücken der noch warmen Platte mittels mindestens zweier Kalanderwalzen auf eine gewünschte Endstärke.
2.- Verfahren nach Absatz 1, dadurch gekennzeichnet, dass zunächst nur 30 % - 40% des bereitgestellten Calciumcarbonat (CaCO3)-Pulvers mit dem Polyvinylchlorid (PVC)-Pulver und den Additiven vermischt werden und das Einmischen des restlichen Calciumcarbonat (CaCO3)-Pulvers in die abkühlende oder abgekühlte Masse erfolgt.
3.- Verfahren nach Absatz 1 oder 2, dadurch gekennzeichnet, dass das Polyvinylchlorid (PVC)-Pulver und das Additivpulver frei von Weichmachern sind
4.- Verfahren nach einem der vorstehenden Absätze, dadurch gekennzeichnet, dass das Polyvinylchlorid (PVC)-Pulver eine Korngröße von 80 bis 200µm.
5.- Verfahren nach einem der vorstehenden Absätze, dadurch gekennzeichnet, dass das Calciumcarbonat (CaCO3)-Pulver eine Korngröße von 1 bis 10 µm aufweist.
6.- Verfahren nach einem der vorstehenden Absätze, dadurch gekennzeichnet, dass die Schlitzdüse des Extruders eine Breite von 1.250 mm und/ oder eine Dicke von 2 bis 10 mm, vorzugsweise 4 mm aufweist.
7.- Verfahren nach einem der vorstehenden Absätze, dadurch gekennzeichnet, dass die extrudierte Platte über drei Kalanderwalzen geführt wird.
8.- Verfahren nach einem der vorstehenden Absätze, dadurch gekennzeichnet, dass mit der Platte zusammen ein Polyvinylchlorid (PVC)-DekorFilm und/oder ein Polyvinylchlorid (PVC)-Schutzfilm über die Kalanderwalzen geführt und mit der Platte verpresst wird.
9.- Verfahren nach einem der vorstehenden Absätze, dadurch gekennzeichnet, dass mittels Kalanderwalzen eine Struktur in die Oberseite der extrudierten Platte eingeprägt wird.
10.- Verfahren nach einem der Absätze 1 bis 7 oder 9, dadurch gekennzeichnet, dass auf die Oberseite der Platte eine Dekorfolie aufkaschiert wird.
11.- Verfahren nach Absatz 9, dadurch gekennzeichnet, dass die Oberseite mit einem zu der Struktur passenden, insbesondere einen hierzu synchronen Dekor bedruckt wird.
12.- Verfahren nach Absatz 11, dadurch gekennzeichnet, dass der Dekordruck digital erfolgt.
13.- Verfahren nach einem der Absätze 1 bis 7 oder 9 bis 12, dadurch gekennzeichnet, dass auf die Oberseite mindestens eine Schicht eines pigmentierten Lacks aufgetragen wird.
14.- Verfahren nach einem der Absätze 11 bis 13, dadurch gekennzeichnet, dass die Oberseite vor dem Bedrucken oder Lackieren mit einem Primer grundiert wird.
15.- Verfahren nach einem der Absätze 8 bis 12 oder 14, dadurch gekennzeichnet, dass das Dekor ein Holzdekor oder ein Steindekor oder ein Fantasiedekor ist.
16.- Verfahren nach einem der vorstehenden Absätze, dadurch gekennzeichnet, dass die Oberseite der Platte zur Erhöhung der Kratzfestigkeit lackiert wird.
17.- Verfahren nach Absatz 16, dadurch gekennzeichnet, dass der Lack auf den oder die Polyvinylchlorid (PVC)-Filme bzw. die Dekorfolie, den Dekordruck oder den pigmentierten Lack aufgetragen wird.
18.- Verfahren nach einem der vorstehenden Absätze, gekennzeichnet durch das Aufteilen der extrudierten Platte in eine Mehrzahl kleinerer Platten, insbesondere Paneele.
19.- Verfahren nach Absatz 1 oder 2, dadurch gekennzeichnet, dass Farbpigmente eingemischt werden.
20.- Platte, die mit einem Verfahren nach einem der vorstehenden Ansprüche hergestellt ist.
21.- Platte nach Absatz 20, dadurch gekennzeichnet, dass sie auf einer, insbesondere auf ihrer der Beschichtung gegenüberliegenden Seite eine weitere Beschichtung, bevorzugt aus extrudiertem Polystyrol (XPS) oder Kork, aufweist.
22.- Platte nach Absatz 21, dadurch gekennzeichnet, dass die weitere Beschichtung eine Stärke von 1 bis 1,5 mm aufweist.
23.- Platte nach Absatz 22, dadurch gekennzeichnet, dass die weitere Beschichtung aufgeklebt ist.
24.- Platte nach einem der Absätze 20 bis 23, gekennzeichnet durch ein spezifisches Gewicht von 1.900 bis 2.100 kg/m3, insbesondere 2.000 kg/ m3.
25.- Platte nach einem der Absätze 20 bis 24, dadurch gekennzeichnet, dass sie an ihren Seitenkanten mit einer zum Verbinden und Verriegeln geeigneten Profilierung zum Verbinden mit identisch ausgestalteten weiteren Platten versehen ist.

## Patentansprüche

1. Verfahren zum Herstellen einer extrudierten Platte mit folgenden Schritten:
a) Bereitstellen von Calciumcarbonat (CaCO3)-Pulver,
b) Bereitstellen von Polyvinylchlorid (PVC)-Pulver,
c) Bereitstellen von Additiven als Stabilisatoren, bestehend aus mindestens Ca/Zn - Stabilisatoren, Schlagzähkomponenten und internen sowie äußeren Wachsen, wobei
c1) der Anteil an Calciumcarbonat (CaCO3)-Pulver größer ist als der Anteil an PVC;
d) Vermischen des Calciumcarbonat (CaCO3)-Pulvers mit dem Polyvinylchlorid (PVC)-Pulver und den Additiven,
e) Erhitzen der Mischung auf eine Temperatur von 100 bis 140°C bis das Polyvinylchlorid (PVC) zu einer knetbaren Masse erweicht und sich das Calciumcarbonat (CaCO3) zumindest teilweise mit dem Polyvinyl (PVC) verbindet,
f) Abkühlen der Masse auf eine Temperatur von 40 bis 50°C,
g) Förderung der Masse zu einem Extruder mittels Schnecken,
h) Aufschmelzen und Extrudieren der Masse mittels eines Extruders und Formen mittels einer Schlitzdüse zu einer Platte,
i) Drücken der noch warmen Platte mittels mindestens zweier Kalanderwalzen auf eine gewünschte Endstärke.

2. Verfahren nach einem der vorstehenden Ansprüche, **dadurch gekennzeichnet, dass** die Schlitzdüse des Extruders eine Breite von 1.250 mm und/ oder eine Dicke von 2 bis 10 mm, vorzugsweise 4 mm aufweist.

3. Verfahren nach einem der vorstehenden Ansprüche, **dadurch gekennzeichnet, dass** die extrudierte Platte über drei Kalanderwalzen geführt wird.

4. Verfahren nach einem der vorstehenden Ansprüche, **dadurch gekennzeichnet, dass** mit der Platte zusammen ein Polyvinylchlorid (PVC)-DekorFilm und/oder ein Polyvinylchlorid (PVC)-Schutzfilm über die Kalanderwalzen geführt und mit der Platte verpresst wird.

5. Verfahren nach einem der vorstehenden Ansprüche, **dadurch gekennzeichnet, dass** mittels Kalanderwalzen eine Struktur in die Oberseite der extrudierten Platte eingeprägt wird.

6. Verfahren nach einem der Ansprüche 1 bis 3 oder 5, **dadurch gekennzeichnet, dass** auf die Oberseite der Platte eine Dekorfolie aufkaschiert wird.

7. Verfahren nach Anspruch 5, **dadurch gekennzeichnet, dass** die Oberseite mit einem zu der Struktur passenden, insbesondere einen hierzu synchronen Dekor bedruckt wird.

8. Verfahren nach Anspruch 7, **dadurch gekennzeichnet, dass** der Dekordruck digital erfolgt.

9. Verfahren nach Anspruch 7 oder 8, **dadurch gekennzeichnet, dass** die Oberseite vor dem Bedrucken oder Lackieren mit einem Primer grundiert wird.

10. Verfahren nach einem der Ansprüche 7 bis 9, **dadurch gekennzeichnet, dass** das Dekor ein Holzdekor oder ein Steindekor oder ein Fantasiedekor ist.

11. Verfahren nach einem der vorstehenden Ansprüche, **dadurch gekennzeichnet, dass** die Oberseite der Platte zur Erhöhung der Kratzfestigkeit lackiert wird.

12. Verfahren nach Anspruch 11, **dadurch gekennzeichnet, dass** der Lack auf den oder die Polyvinylchlorid (PVC)-Filme bzw. die Dekorfolie, den Dekordruck oder den pigmentierten Lack aufgetragen wird.

13. Verfahren nach einem der vorstehenden Ansprüche, **dadurch gekennzeichnet, dass** das Aufteilen der extrudierten Platte in eine Mehrzahl kleinerer Platten, insbesondere Paneele.

14. Verfahren nach einem der vorstehenden Ansprüche, **dadurch gekennzeichnet, dass** der Anteil an Calciumcarbonat (CaCOs)-Pulver zwischen 60 und 80 Gew.%, der Anteil an Polyvinylchlorid (PVC)-Pulver zwischen 20 und 40 Gew.% und der Anteil an Additiven bis zu 5 Gew.% beträgt.
